# EUROPEAN PATENT SPECIFICATION

(11) **EP 0 557 056 B1**
(45) Date of publication and mention of the grant of the patent: **21.12.1994**
(21) Application number: 93301127.2
(22) Date of filing: 17.02.1993
(51) Int. Cl.: B66D 3/20, H02K 21/24, H02K 7/12

(54) **Electric hoist**
Elektrisches Hebezeug
Palan électrique

(30) Priority: 19.02.1992 GB 9203652
(43) Date of publication of application: 25.08.1993
(73) Proprietor: MORRIS MECHANICAL HANDLING LIMITED, Loughborough, Leicestershire LE11 1RL (GB)
(72) Inventor: Rouard,Denis, F-54190 Villerupt (FR); Roberts,Andrew, Newport Pagnell,Bucks. (GB)
(74) Representative: Kirk, Geoffrey Thomas

(56) References cited:
- EP-A- 0 164 827
- EP-A- 0 208 467
- EP-A- 0 357 317
- GB-A- 2 115 367
- US-A- 3 048 723

## Description

This invention relates to hoists in which an inbuilt electric motor is used to cause a chain to move in the direction of its length so that a load attached to the chain can be moved (US-A-3 048 723).

According to the present invention a hoist comprises an electric motor, a chain for supporting a load, and a mechanical transmission for converting rotation of the motor to movement of the chain in the direction of its length, the electric motor is a face plate motor having a stator winding and a rotor which are in separate modules which are releasably secured together such that there is an electromagnetic coupling between the stator winding and the rotor when the stator winding is energised.

This form of construction allows the mechanical components including the transmission and the rotor of the motor to be assembled in one module and for this to be tested independently of the module which contains the stator winding. After these two modules have been assembled and tested they are brought together and releasably connected together, by bolts and the like, such that there is an electromagnetic coupling between the stator winding and the rotor when the stator winding is energised. It is a relatively simple operation to replace the stator winding if this should become necessary.

The stator winding is energised to produce a rotating magnetic field and this field causes the rotor to rotate and the mechanical transmission converts rotation of the rotor to a motion which brings about movement of the chain to raise and lower a load attached to the chain.

Conveniently there is an electrical control unit for controlling the energisation of the motor and the control unit is located in a module other than the module which contains the rotor. It may be located in a further module which is separate from the modules which contain the rotor and the stator winding and which is releasably secured thereto. Alternatively it may be included in the module which includes the stator winding.

Conveniently, the rotor is biased into a braking position when the stator winding is not energised. This serves as a fail-safe device in that the rotor cannot be rotated and the chain moved in the direction of its length when the stator winding is not energised. Energisation of the stator winding brings about an axial displacement of the rotor out of the braking position, prior to rotation of the rotor.

In order that the invention may be more readily understood, it will now be described, by way of example only, with reference to the accompanying drawings, in which:-
Figure 1 is a perspective view of a hoist in accordance with one embodiment of the invention;
Figure 2 is a perspective view of the hoist shown in Figure 1 with the three modules which make up the hoist shown separated.
Figure 3 is a diagrammatic perspective view of the important components of the hoist;
Figure 4 is a sectional plan view showing the mechanical transmission;
Figure 5 is a perspective view of a hoist in accordance with an alternative embodiment of the invention and
Figure 6 is a perspective view of the hoist shown in Figure 5 with the two modules which make up the hoist shown separated.

A hoist for raising loads comprises a housing 1 having a loop 2 attached to it by which the hoist can be suspended from a support (not shown). The hoist includes an elongate chain having a hook at one end by which a load can be raised and lowered. The chain and the hook are not shown in the drawings.

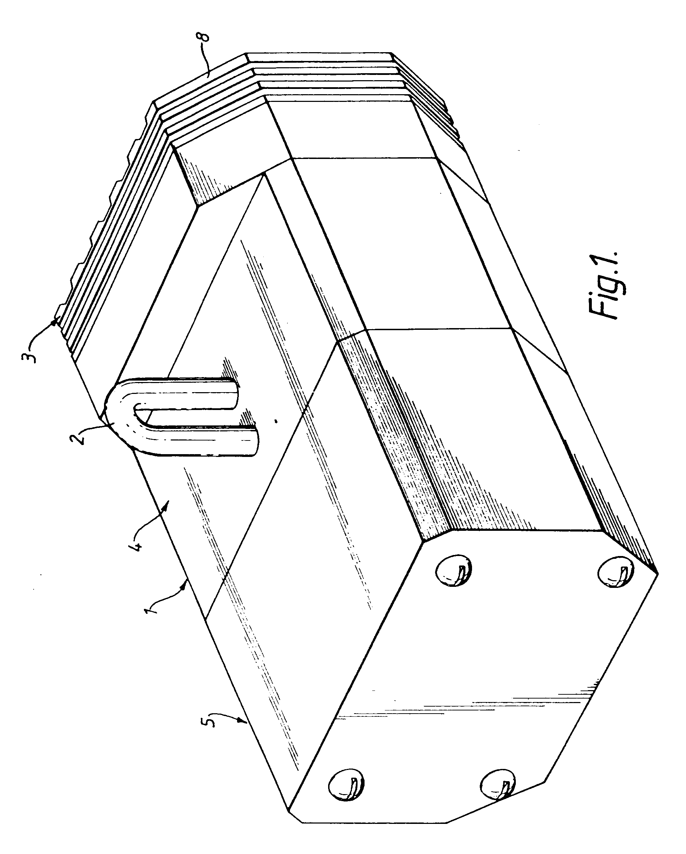

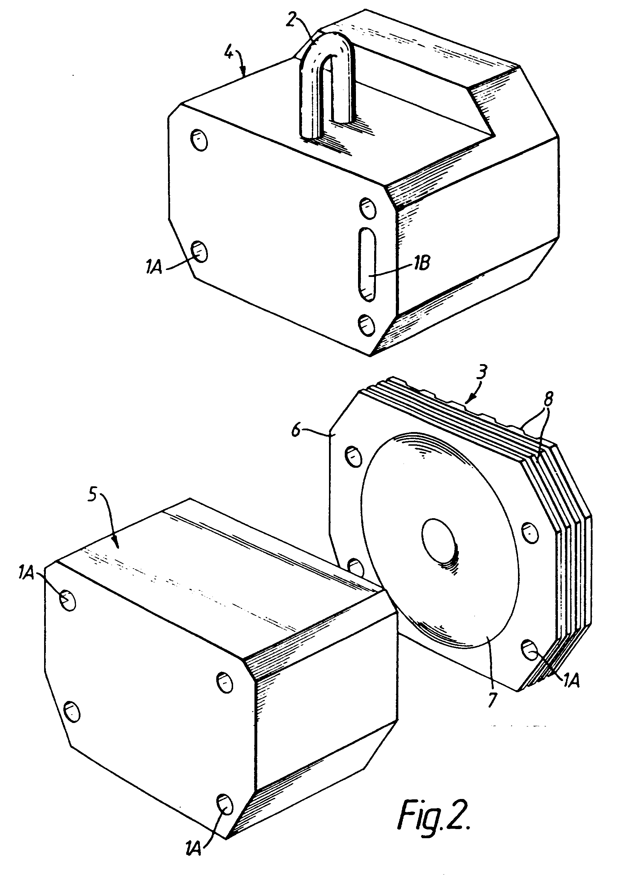

In the arrangement shown in Figures 1 to 4 the housing 1 is made up of three parts or modules 3, 4 and 5. These modules are separate from each other as shown in Figure 2 but they are secured together as shown in Figure 1 by removable bolts or the like (not shown) which pass through bolt holes 1A.

The electric motor employed in the hoist is a face plate motor and this type of motor comprises a flat stator winding which is supplied with energising current and it produces a revolving magnetic field. A rotor in the form of a circular disc is arranged adjacent to, but separated from, the flat face of the stator and the rotor is caused to rotate by the rotating electromagnetic field produced by the energised stator winding.

The module 3 comprises a block 6 having an annular stator winding 7 embedded in a recess in one of its flat faces. The other outer faces of the block are provided with cooling fins 8.

The module 4 contains the rotor 9 and the mechanical transmission by which rotation of the rotor is used to displace the chain to raise and lower the load.

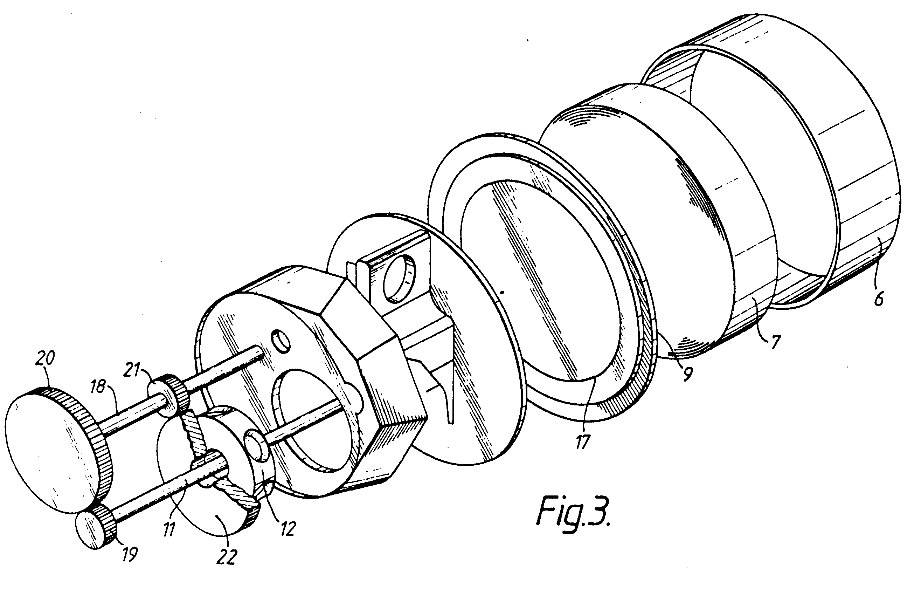

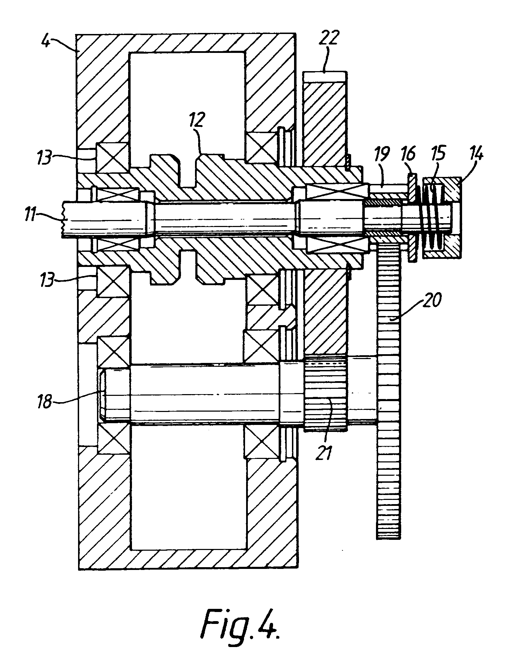

Referring to Figures 3 and 4, the rotor 9 is in the form of a disc and when the modules 3 and 4 are secured together as shown in Figure 1, the disc is parallel to the flat face of the stator winding 7 with an air gap between them.

The rotor disc is mounted at one end of a shaft 11 which is supported in bearings in the housing of module 4. The shaft 11 extends coaxially through a sprocket 12 rotatably mounted in bearings 13 in the housing 4. The end of the shaft 11 away from the rotor 9 extends into a cup 14 and a spring 15 acts between the cup and a collar 16 on the shaft in order to bias the shaft in its axial direction.

On the side of the disc 9 which is away from the stator there is an annular friction pad 17 and when the motor stator winding is not energised the spring 15 biasses the shaft so that the friction pad 17 engages with a brake surface mounted on the module 4 to prevent the shaft from rotating.

The chain passes around the sprocket 12 so that the links on the chain engage with the sprocket whereby rotation of the sprocket displaces the chain in the direction of its length.

The mechanical transmission between the shaft 11 and the sprocket 12 includes an intermediate shaft 18 rotatably mounted in the housing of the module 4 with its longitudinal axis parallel to that of the shaft 11.

A first stage reduction gearing comprises gears 19, 20 mounted on the shaft 11 and the intermediate shaft 18 respectively. This gearing has to allow for the axial movement of the shaft 11. A second stage reduction gearing comprises further gears 21, 22 mounted on the intermediate shaft and connected to the sprocket 12 respectively.

The module 5 contains a control unit for energising the motor. The control unit is connected to the windings of the stator through a duct 1B extending through the module 4.

After all the modules have been assembled and tested the modules are brought together and secured by bolts. The connection between the modules 3 and 4 is such that the rotator disc 9 is parallel to, and spaced from, the face of the stator by an air gap. The rotor cannot be rotated because the friction pad is biassed into engagement with the housing of the module. When the stator winding is energised, a magnetic field is developed which causes sufficient attraction of the disc towards the stator to disconnect the friction pad from the module. The rotor is then caused to rotate by the action of the rotating magnetic field set up by the energised state of the winding. The rotation of the rotor rotates the shaft 11 which through the mechanical transmission rotates the sprocket 12 causing the chain to be moved in the direction of its length and this enables a load connected to the chain to be raised and lowered.

When the stator is de-energised, the rotor disc moves axially away from the stator winding and this engages the friction pad with the housing thus serving to brake the movement of the rotor and, hence, the chain is held without further movement.

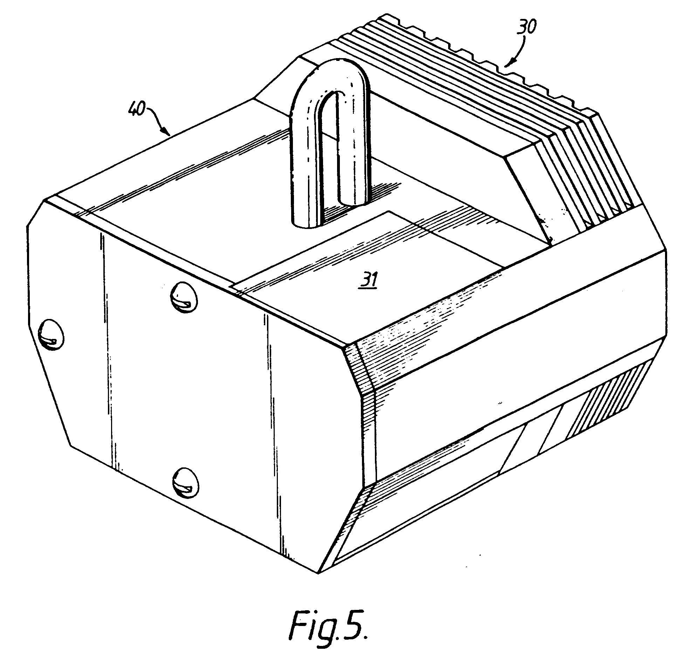

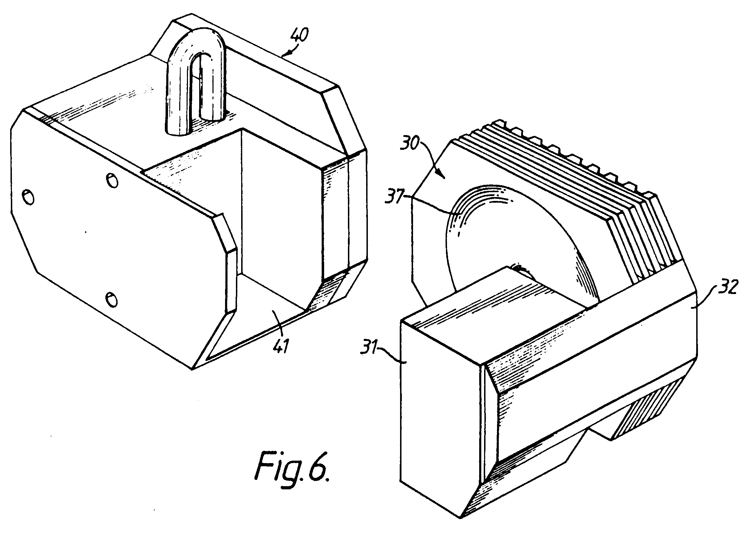

The embodiment of the invention shown in Figures 5 and 6 has two modules which are releasably secured together. The module 30 comprises a block having the annular stator winding 37 embedded in one of its faces and spaced from the block there is a control box 31 containing the control circuit for controlling the energisation of the stator winding. Wiring connections between the stator winding and the control box extend through a channel in a part 32 of the housing.

The other module 40 contains the rotor and the mechanical transmission and the module 40 has a housing with a cut-away portion 41 which receives the control box 31 of the module 30 when the two modules are secured together.

## Claims

1. A hoist comprising
an electric motor;
a chain for supporting a load and a mechanical transmission for converting rotation of the motor to movement of the chain in the direction of its length;
characterised in that the electric motor is a face plate motor having a stator winding (7, 37) and a rotor (9);
the stator winding and the rotor are in separate modules (4,3) which are releasably secured together such that there is an electromagnetic coupling between the stator winding and the rotor when the stator winding is energised.

2. A hoist as claimed in claim 1, characterised in that the stator winding (7, 37) is in an end face of a housing of a first module (3, 30);
the rotor (9) is rotatably mounted in a housing of a second module (4, 40) and includes a disc located in an end face of the housing;
the disc and the stator winding being arranged in parallel spaced apart relation when the two modules (3, 30; 4, 40) are secured together.

3. A hoist as claimed in claim 1 or 2, characterised in that the rotor is biassed into a braking position when the stator winding is not energised.

4. A hoist as claimed in claim 3, characterised in that the rotor is axially displaceable between a position in which it is braked when the stator winding is not energised and a position in which it is not braked when the stator winding is energised.

5. A hoist as claimed in claim 4 characterised in that the rotor disc carries an annular brake pad (17).

6. A hoist as claimed in any preceding claim characterised in that the mechanical transmission includes a shaft (11) in driving relation with the rotor, said shaft extending coaxially through a sprocket 12 for the chain and being connected by way of gearing and an intermediate shaft (18) with the sprocket.

7. A hoist as claimed in any preceding claims, characterised in that an electrical control unit for controlling the energisation of the motor forms part of a module (5) other than the module containing the rotor.

8. A hoist as claimed in claim 7, characterised in that the electrical control unit is in a third module (5)separate from and releasably secured to the module (4) containing the rotor.

## Patentansprüche

1. Hebezeug mit
einem elektrischen Motor,
einer Kette zum Tragen einerLast und einem mechanischen Getriebe zur Umwandlung der Motordrehung in die Bewegung der Kette in Richtung ihrer Länge,
dadurch gekennzeichnet, daß der elektrische Motor ein Planscheibenmotor mit einer Ständerwicklung (7,37) und einem Läufer (9) ist, und
die Ständerwicklung und der Läufer in getrennten, lösbar zusammengesetzten Moduln (4,3) sind, so daß zwischen der Ständerwicklung und dem Läufer eine elektromagnetische Kopplung besteht, wenn die Ständerwicklung erregt wird.

2. Hebezeug nach Anspruch 1, dadurch gekennzeichnet, daß die Ständerwicklung (7,37) in einer Stirnseite eines Gehäuses eines ersten Moduls (3,30) angeordnet ist,
der Läufer (9) in einem Gehäuse eines zweiten Moduls (4,40) drehbar angebracht ist und eine in einer Stirnseite des Gehäuses angeordnete Scheibe umfaßt, und
die Scheibe und die Ständerwicklung parallel und mit Abstand zueinander angeordnet sind, wenn die zwei Module (3,30; 4,40) miteinander verbunden sind.

3. Hebezeug nach Anspruch 1 oder 2, dadurch gekennzeichnet, daß der Läufer durch Vorspannung in eine Bremslage gedrückt wird, wenn die Ständerwicklung nicht erregt ist.

4. Hebezeug nach Anspruch 3, dadurch gekennzeichnet, daß der Läufer zwischen einer Position, in der er bei Nichterregung der Ständerwicklung gebremst ist, und einer Position, in der er bei Erregung der Ständerwicklung nicht gebremst ist, axial verschieblich ist.

5. Hebezeug nach Anspruch 4, dadurch gekennzeichnet, daß die Läuferscheibe ein ringförmiges Bremspolster (17) trägt.

6. Hebezeug nach einem vorhergehenden Anspruch, dadurch gekennzeichnet, daß das mechanische Getriebe eine in Antriebsverbindung mit dem Läufer stehende Welle (11) umfaßt, die sich koaxial durch ein Kettenrad (12) für die Kette erstreckt und über ein Getriebe und eine Zwischenwelle (18) mit dem Kettenrad verbunden ist.

7. Hebezeug nach einem vorhergehenden Anspruch, dadurch gekennzeichnet, daß eine elektrische Steuereinheit zur Steuerung der Motorerregung Teil eines anderen Moduls (5) als des Moduls ist, der den Läufer enthält.

8. Hebezeug nach Anspruch 7, dadurch gekennzeichnet, daß die elektrische Steuereinheit in einem dritten Modul (5) angeordnet ist, die von dem den Läufer enthaltenden Modul (4) getrennt und mit diesem lösbar verbunden ist.

## Revendications

1. palan comprenant:-
un moteur électrique;
une chaîne de support de charge et une transmission mécanique pour transformer la rotation du moteur en déplacement linéaire de la chaîne sur sa longueur;
caractérisé par le fait que le moteur électrique est un moteur à rotor à disque et à stator plat ayant un enroulement de stator (7, 37) et un rotor (9);
l'enroulement de stator et le rotor sont logés dans des modules séparés (4, 3) assemblés de manière amovible pour établir un accouplement électromagnétique entre l'enroulement de stator et le rotor lorsque l'enroulement du stator est mis sous tension.

2. Palan selon la revendication 1, caractérisé par le fait que l'enroulement de stator (7, 37) est logé dans une face d'extrémité du carter du premier module (3, 30);
le rotor (9) est monté à l'intérieur du carter du second module (4, 40) et comporte un disque logé à l'intérieur d'une face d'extrémité du carter;
le disque et l'enroulement de stator étant aménagés parallèlement et étant espacés l'un par rapport à l'autre lorsque les deux modules (3, 30; 4, 40) sont assemblés.

3. Palan selon la revendication 1 ou la revendication 2, caractérisé par le fait que le rotor est repoussé en position de freinage lorsque l'enroulement de stator est hors tension.

4. Palan selon la revendication 3, caractérisé par le fait que le rotor est déplaçable axialement entre une position dans laquelle il est freiné lorsque l'enroulement de stator n'est pas sous tension et dans une autre position dans laquelle il n'est pas freiné lorsque l'enroulement du stator est sous tension.

5. Palan selon la revendication 4, caractérisé par le fait que le rotor à disque comporte un sabot de frein annulaire (17).

6. Palan selon l'une quelconque des revendications qui précèdent caractérisé par le fait que la transmission mécanique comporte un arbre (11) entraîné directement par le rotor, cet arbre s'étendant coaxialement au travers du pignon (12) pour que la chaîne puisse être entraînée par un engrenage et un arbre intermédiaire (18) comportant un engrenage.

7. Palan selon l'une quelconque des revendications précédentes, caractérisé par le fait que l'unité de commande électrique pour commander la mise sous tension du moteur fait partie du module (5) qui est indépendant du module contenant le rotor.

8. Plan selon la revendication 7, caractérisé par le fait que l'unité de commande électrique est dans un troisième module (5) indépendant et assemblé de manière amovible du module (4) contenant le rotor.
